(19) Europäisches Patentamt
European Patent Office
Office européen des brevets

(11) **EP 4 159 428 B1**

(12) **EUROPÄISCHE PATENTSCHRIFT**

(45) Veröffentlichungstag und Bekanntmachung des Hinweises auf die Patenterteilung:
**20.11.2024 Patentblatt 2024/47**

(21) Anmeldenummer: **22198416.4**

(22) Anmeldetag: **28.09.2022**

(51) Internationale Patentklassifikation (IPC):
**B32B 1/08** *(2006.01)* **B32B 5/20** *(2006.01)*
**B32B 7/12** *(2006.01)* **B32B 27/06** *(2006.01)*
**B32B 27/08** *(2006.01)* **B32B 27/32** *(2006.01)*
**B32B 27/34** *(2006.01)* **B32B 37/00** *(2006.01)*

(52) Gemeinsame Patentklassifikation (CPC):
**B32B 1/08; B29C 48/0012; B29C 48/0018;**
**B29C 48/022; B29C 48/09; B29C 48/21;**
**B29C 48/40; B29C 48/49; B29C 48/605;**
**B29C 48/92; B32B 5/20; B32B 7/12; B32B 27/065;**
**B32B 27/08; B32B 27/32;** (Forts.)

(54) **MEHRSCHICHTIGE KUNSTSTOFFHÜLLE MIT EINER PORÖSEN LEBENSMITTEL-KONTAKTSEITE, GEEIGNET ZUR ÜBERTRAGUNG VON LEBENSMITTELZUSATZSTOFFEN**

MULTI-LAYER PLASTIC CASING WITH A POROUS FOOD CONTACT SIDE SUITABLE FOR TRANSFERRING FOOD ADDITIVES

BOTIER EN PLASTIQUE MULTICOUCHE AVEC UNE FACE POREUSE EN CONTACT AVEC LES ALIMENTS ADAPTÉE AU TRANSFERT D'ADDITIFS ALIMENTAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2021 DE 102021125656**

(43) Veröffentlichungstag der Anmeldung:
**05.04.2023 Patentblatt 2023/14**

(73) Patentinhaber: **Kalle GmbH**
**65203 Wiesbaden (DE)**

(72) Erfinder:
• **Raskita, Igor**
**65183 Wiesbaden (DE)**
• **König, Martina**
**65207 Wiesbaden (DE)**
• **Delius, Ulrich**
**22946 Trittau (DE)**

• **Füßer, Hans**
**64839 Münster (DE)**
• **Schmidt, Michael**
**65375 Oestrich-Winkel (DE)**

(74) Vertreter: **Plate, Jürgen**
**Plate Schweitzer Zounek**
**Patentanwalt**
**Industriepark Kalle-Albert, Gebäude H391**
**Rheingaustraße 196**
**65203 Wiesbaden (DE)**

(56) Entgegenhaltungen:
**EP-A1- 3 014 997**

(52) Gemeinsame Patentklassifikation (CPC): (Forts.)
**B32B 27/34;** B29C 48/10; B32B 2250/03;
B32B 2266/0221; B32B 2266/0257; B32B 2270/00;
B32B 2307/518; B32B 2307/7246; B32B 2439/70;
B32B 2597/00

**Beschreibung**

Die Erfindung betrifft eine coextrudierte, mehrschichtige, wasserdampfundurchlässige, schlauchförmige und nahtlose Nahrungsmittelhülle mit einer oder mehreren porösen Schichten, welche zur effizienten Aufnahme, Speicherung und zum Transfer von Lebensmittelzusatzstoffen auf ein mit der Innenseite in Kontakt stehendes Füllgut in der Lage ist. Sie betrifft daneben ein Verfahren zur Herstellung der Hülle sowie ihre Verwendung als Lebensmittelverpackung.

Im Stand der Technik ist eine mehrschichtige Nahrungsmittelhülle mit mindestens einer porösen Schicht bekannt. WO 2017/148682 A1 beschreibt eine schlauchförmige, coextrudierte Folie bestehend aus drei "Schichtpaketen". Das innere "Schichtpaket" besteht aus mehreren an einander grenzenden Schichten, welche jeweils aus einem geschäumten Polymer vom Typ Polyolefin bestehen. Die inneren Schichten basieren stets auf Polyolefin, speziell mindestens einem olefinischen Polymer, Copolymer oder Terpolymer, insbesondere aus der Gruppe LDPE, LLDPE, VLDPE sowie Mischung hiervon, speziell Copolymere und Terpolymere mit C3-C10-alpha-Olefinen oder Alkyl(meth)acrylaten. Das äußere Paket besteht aus mehreren Schichten jeweils vom Typ Polyamid. Zwischen diesen Schichtpaketen befindet sich eine haftvermittelnde Schicht. Die Hohlräume bzw. offenen Zellen bzw. Poren bei den Schichten des "inneren Pakets" werden während der Coextrusion per zugesetztes Schäumungsmittel erzeugt. Bevorzugt sind chemische Schäumungsmittel, speziell Alkali(bi)carbonate und Zitronensäure. Die Innenseite der Folie ist zur Abgabe oder Übertragung von Lebensmittelzusatzstoffen in der Lage.

Aus der EP 3 014 997 A1 ist eine mehrschichtige Lebensmittelhülle mit einer porösen Schicht bekannt. Der Stand der Technik schildert eine coextrudierte Lebensmittehülle mit mindestens folgenden drei Schichten:

- mindestens eine innere poröse Schicht,
- mindestens eine Barriereschicht (d.h. eine Schicht mit einer Sperrwirkung für Wasserdampf und/oder Sauerstoff),
- mindestens eine Haftschicht,

wobei die Porosität erstgenannter Schicht durch (Co)Extrudieren einer Polymerzusammensetzung und eines überkritischen Porenbildners erzeugt wird. Die poröse Schicht ist in der Lage, mindestens ein funktionales (Lebensmittel)Additiv aufzunehmen, festzuhalten, zu desorbieren und auf das umhüllte Lebensmittel zu übertragen. Als überkritischer Porenbildner werden div. Gase im überkritischen Zustand definiert. Bevorzugt sind Kohlenstoffdioxid ($CO_2$) und Stickstoff ($N_2$). Die poröse Schicht selbst enthält vorzugsweise ein organisches Polymer, besonders bevorzugt ein Polymer der Gruppen (Co)Polyamide, Polyolefine, Vinylcopolymere, Vinylidencopolymere und (Co)Polyester. Die Einbringung des überkritischen Porenbildners in das schichtbildende Polymer erfolgt über einen oder mehrere Zutrittsöffnungen am Extruder; bevorzugt über eine Extrudersektion mit einer Vielzahl radial verteilter Einspritzdüsen. Ebenfalls bevorzugt ist eine Verfahrensausführung mit Anordnung der Zutrittsöffnung(en) oberhalb einer Mischsektion des Extruders, wo dessen Schnecke vielfach durchbrochene Schneckenflügel beinhaltet.

EP 1 911 352 A1 beschreibt eine coextrudierte, mehrschichtige verstreckte Hülle mit einer porösen Innenschicht. Die Innenschicht enthält vorzugsweise mindestens eine Kunststoffkomponente und mindestens ein Agens, welches die Bildung von Poren oder Porenkanälen während des Verstreckens unterstützt. Bevorzugt enthält die Innenschicht zusätzlich einen (flüssigen) Emulgator und einen feinkörnigen organischen und/oder anorganischen Füllstoff. Weiterhin ist ein Mineralöl als Komponente der Innenschicht bevorzugt. Die Kunststoffkomponente ist typischerweise ein organisches thermoplastisches Polymer; dieses vorzugsweise aus der Gruppe aliphatische oder teilaromatische (Co)Polyamide, Polyolefine, Polyurethane, Vinylpolymer, Vinylidenchlorid(co)polymere und (Co)Polyester. Die poröse Schicht ist ebenfalls in der Lage, mindestens ein funktionales (Lebensmittel)Additiv aufzunehmen, festzuhalten, zu desorbieren und auf das umhüllte Lebensmittel zu übertragen.

DE 10 2008 017920 A1 beschreibt in ähnlicher Weise eine Hülle, welche auf der Innenseite eine Farbstoff- und/oder aromastoff-haltige Flüssigkeit festzuhalten vermag. Die Innenschicht ist nicht porös, sondern reliefartig ausgebildet. Die Reliefelemente sind bezüglich Länge und Volumen spezifiziert. Beispiel 6 beschreibt eine 5-schichtige Hülle, bei der für die Innenschicht eine Kombination von Polyamid 6 und einem Treibmittel-Superkonzentrat (Masterbatch mit Substanzen, welche thermisch Gase abspalten) eingesetzt wurde.

WO 2005/097461 A1 offenbart schließlich eine coextrudierte, mindestens zweischichtige Hülle mit einer Außenschicht, welche eine Porosität von mindestens 5 Vol.-% und eine Rauhtiefe $R_z$ von mindestens 5,0 $\mu$m aufweist. Die Oberfläche der Außenschicht weist an der Oberfläche offene Poren und/oder Poren mit kraterartig hervortretenden Rändern auf. Diese Poren bewirken auf der Außenseite der Hülle ein mattes Erscheinungsbild, welches demjenigen von Hautfaserdarm, faserverstärktem Cellulosedarm oder Naturdarm sehr ähnlich gestaltet werden kann. Die Erzeugung der Oberflächenstruktur der Außenschicht erfolgt in einer der Ausführungsformen durch physikalische oder chemische Verschäumung einer Kunststoffschmelze. Bevorzugt davon ist die chemische Verschäumung mittels in der Wärme gasabspaltender Substanzen (z.B. Natriumhydrogencarbonat).

Die aus WO 2017/148682 A1 bekannten Polymere sind durchweg sehr unpolar bzw. hydrophob und weisen insofern sehr geringe Affinität zu polaren Medien wie einer proteinhaltigen Fleischemulsion auf. Beim Erhitzen solcher Emulsionen in Hüllen bildet sich zwischen der koagulierten Fleischoberfläche und der Hülle keine Haftung aus. Demzufolge kann in der Emulsion enthaltenes Wasser sich an der Grenzfläche zwischen Fleisch und Hülle abscheiden (sogenannter "purge" oder Geleeabsatz).

Ein weiterer durch die Unpolarität der polyolefinischen Schichtmaterialien bedingter Nachteil ist deren geringe Permeabilität für polare Medien. Bei der Absorption und Desorption typischer, wasserhaltiger, polarer Lebensmittelzusatzstoffe (Flüssigrauch, Farbstoffe und Aromen) respektive deren Formulierungen kann ein Transport zwischen den Hohlräumen nur insoweit erfolgen, wie letztere miteinander kommunizieren (also durch Kanäle o. ä.) und miteinander verbunden sind. Eine Wanderung von Wasser oder polaren Stoffen zwischen voneinander isolierten Hohlräumen, also durch die Matrix hindurch findet extrem langsam statt. Insofern werden von den Hohlräumen des "Schichtpakets" für die Absorption und Desorption nur jene genutzt, welche direkt an der inneren Oberfläche der Hülle liegen oder über "Kanäle" mit an der inneren Oberfläche liegenden Hohlräumen verbunden sind. Die Übertragungsfunktion der Hülle ist daher nicht effizient.

Schließlich ist die Unpolarität der polyolefinischen Schichtoberfläche nachteilig für die Gleichmäßigkeit der Absorption polarer bzw. wässriger Lebensmitteladditive (Lebensmittelzusatzstoffe). Letztere neigen dazu, von der Oberfläche abzuperlen bzw. spontan zu Tröpfchen zusammenzufließen. Bei kürzerer Kontaktzeit mit dem Lebensmitteladditiv zwischen Beschichten und Trocknung finden deswegen keine gleichmäßige Belegung der Oberfläche und keine vollständige Absorption des Additivs wenigstens in den offenen Poren der Schaumstruktur statt. Im Fall farbiger Additive kann beim abgefüllten Lebensmittel daraus ein fleckiger, blasser Farbeindruck auf dessen Oberfläche resultieren.

Gegenstand der DE 10 2004 017 350 A1 ist eine mehrschichtig coextrudierte, nahtlose Nahrungsmittelhülle aus thermoplastischem Kunststoffmaterial. Die Außenschicht weist eine Porosität von mindestens 5 Vol.-% und eine Rauhtiefe auf ihrer Oberfläche von mindestens 5 $\mu$m auf. Die Hülle hat damit ein mattes Aussehen, ähnlich dem von Naturdärmen oder Hüllen auf Basis von regenerierter Cellulose. Um die Porosität zu erzeugen, wird vor der Extrusion dem Material der Außenschicht ein Treibmittel, wie Natriumhydrogencarbonat, und/oder ein Treibgas zugesetzt, das bei Druckentlastung zu Poren oder Blasen in dem Material führt.

In der EP 3 014 997 A1 ist eine mehrschichtige, coextrudierte, nahtlos schlauchförmige Nahrungsmittelhülle mit mindestens einer porösen Innenschicht offenbart. Gemäß der EP 3 014 997 A1 wird die Porosität der Innenschicht(en) durch durch einen überkritischen Porenbildner erzeugt, der unmittelbar vor der Extrusion zugefügt wird. "Überkritischer Porenbildner" impliziert, dass ein unter Normalbedingungen gasförmiges Medium (z.B. $CO_2$ oder $N_2$) bereitgestellt, durch Beaufschlagen mit hohem Druck und niedriger Temperatur in einen überkritischen Zustand versetzt und so in eine Kunststoffschmelze eingebracht wird, dass es dort durch Expansion Poren ausbildet. Dieses Prinzip ist als physikalisches Schäumen von Kunststoffen bekannt.

Nachteilig beim physikalischen Schäumungsprozess ist der ungewöhnlich hohe verfahrenstechnische Aufwand. Zur Generierung des überkritischen Zustands ist eine Kompression sowie eine Temperierung des zum Schäumen verwendeten Mediums notwendig. Zur feinen Distribution des überkritischen Mediums in der Schmelze bedarf es vorzugsweise eines speziellen, aufwändigen Extruders mit diversen, radial angeordneten Einspeisedüsen und einem Mischsegment entlang der Extruderschnecke mit vielfach durchbrochenen Elementen ("Flights").

Gemäß der EP 3 014 997 A1 sind für die poröse Innenschicht geeignet: (Co)Polyamide, Polyolefine, Vinylcopolymere (wie Polyvinylalkohol, Ethylen/Vinylalkohol-Copolymere, Polyvinylpyrrolidon, Polystyrol, Polyvinylchlorid und/oder Polyvinylfluorid), Vinylidenchloridcopolymere oder (Co)Polyester (wie Polylactide, Polycaprolacton, Polycarbonat oder Copolymere von Diolen mit aliphatischen oder aromatischen Dicarbonsäuren) enthalten. Als besonders geeignet sind Ethylen- und Propylencopolymere sowie mit Maleinsäureanhydrid gepfropfte Polyolefine bezeichnet. Weiter kann sie ein Nukleierungsmittel enthalten. Der Anteil des gegebenenfalls vorhandenen Nukleierungsmittels ist nicht genannt. Als Nukleierungsmittel offenbart sind neben anderen auch Carbonate, wie Natriumbicarbonat, und Azoverbindungen, wie Azodicarbonamide. Darüber hinaus kann die mehrschichtige Hülle gemäß der EP 3 014 997 A1 Schichten aufweisen, die zu einem wesentlichen Teil aus aliphatischem und/oder teilaromatischem (Co-)Polyamid bestehen. In den Beispielen konkret offenbart sind jedoch allein mehrschichtige Hüllen mit einer aufgeschäumten Innenschicht aus einem Ethylen/Butylen-Copolymer (C4-LLDPE) und einem Füllstoff-Masterbatch aus Talkum und LLDPE - ohne Nukleierungsmittel oder andere Zusätze.

EP 1 911 352 A1 beschreibt als Bestandteil der coextrudierten, innenliegenden Schicht vorzugsweise einen Emulgator sowie ein Öl. Diese Stoffe sind bei den Temperaturen der Extrusion sehr dünnflüssig bzw. wesentlich dünnflüssiger als das matrixbildende organische Polymer. Es ist bekannt, dass Mischungen von zähflüssigen und dünnflüssigen Medien unter dem Schergefälle, welches im Düsenspalt einer Extrusionsdüse vorliegt, zur Separation neigen. Konkret wandert das dünnflüssigere Medium in Richtung des größten Schergefälles, also in Richtung der Spaltoberflächen (bei Coextrusion in Richtung der inneren Spaltoberfläche). Konsequenz ist eine Anreicherung des Mediums an der innenliegenden Oberfläche des Coextrudats, gefolgt von sukzessiver Abscheidung an der Düsenkante. Die Abscheidungen müssen regelmäßig entfernt werden, um Störungen bei der Schlauchformung zu vermeiden. Die Effizienz des Herstellprozesses ist dadurch beeinträchtigt.

Die Hülle gemäß DE 10 2008 017 290 A1 beinhaltet keine Hohlräume oder Poren, sondern lediglich eine reliefartige Ausbildung der innenliegenden Schicht. Diese Schicht besitzt dadurch eine leicht vergrößerte "äußere Oberfläche", jedoch nicht die viel größere "innere Oberfläche" und kein inneres Volumen, wie es bei porösen Strukturen vorliegt. Demzufolge kann die Hülle Lebensmittelzusatzstoffe nur begrenzt aufnehmen und übertragen.

WO 2005/097461 A1 beschreibt eine mehrschichtige Hülle mit einer porösen Außenschicht. Die Porosität führt zu einem matten Erscheinungsbild der Außenseite. Eine Lebensmittel-Übertragungsfunktion ist aufgrund der Lage der porösen Schicht nicht möglich und nicht beabsichtigt.

Es ist daher eine Aufgabe der vorliegenden Erfindung eine (Barriere)Hülle auf Basis thermoplastischer Kunststoffe bereitzustellen, welche die oben beschriebenen Nachteile des Stands der Technik nicht aufweist. Insbesondere soll die Hülle die Fähigkeit zu einer schnellen, gleichmäßigen und hohen Aufnahme von Lebensmittelzusatzstoffen, deren Speicherung und effizienten Übertragung auf ein in der Hülle abgepacktes Füllgut besitzen.

Gelöst wurde die Aufgabe durch eine coextrudierte, schlauchförmige, wasserdampfundurchlässige und nahtlose Hülle mit mindestens drei Schichten. Mindestens eine Schicht ist porös und bildet eine Oberflächenschicht, die einem Lebensmittel zugewandt ist. Mindestens eine poröse Schicht umfasst ein aliphatisches (Co-)Polyamid und ein hydrophiles (Co-)Polymer mit einer mittleren Molmasse $M_w$ von mindestens 8.000 Da (bestimmt per GPC = Gelpermeationschromatographie), wobei der Anteil des hydrophilen (Co)Polymers in der porösen Schicht von 3 bis 40 Gew.-% beträgt, bezogen auf das Gesamtgewicht der jeweiligen porösen Schicht. Die mindestens eine poröse Schicht ist zu einer effizienten Aufnahme, Speicherung und Übertragung von Lebensmittelzusatzstoffen in der Lage.

Die Erfindung beinhaltet auch ein entsprechendes Herstellungsverfahren, bei dem die Porosität besagter Schicht(en) durch Einsatz eines oder mehrerer chemischer Treibmittel erfolgt. Als chemische Treibmittel werden organische oder anorganische Substanzen bezeichnet (z.B. Zitronensäure, Azodicarbonamid, Natriumhydrogencarbonat), die bei erhöhter Temperatur eine oder mehrere bei Normalbedingungen gasförmige Substanz(en) abspalten (z.B. $CO_2$ oder $N_2$). Optional beinhaltet das Herstellungsverfahren auch eine biaxiale Verstreckung der Hülle, vorzugsweise in einem sogenannten double-bubble oder triple-bubble-Prozess. Durch die biaxiale Verstreckung wird die mechanische Festigkeit und Elastizität der Hülle deutlich erhöht. Superkritische Porenbildner, wie superkritisches $CO_2$ oder superkritischer Stickstoff, werden in der vorliegenden Erfindung nicht eingesetzt. Sie sind deutlich schwerer zu dosieren und mit den anderen Bestandteilen der Innenschicht zu vermischen als chemische Treibmittel.

In einer Ausführungsform besitzt die Hülle eine poröse Schicht, welche an der dem Lebensmittel zugewandten Oberfläche der Hülle angeordnet ist. Bevorzugt sind jedoch Ausführungsformen mit zwei, drei oder mehr aneinandergrenzenden porösen Schichten, von denen eine die dem Lebensmittel zugewandte Oberfläche bildet.

Als "wasserdampfundurchlässig" wird im Zusammenhang mit der vorliegenden Erfindung eine Hülle verstanden, die eine Durchlässigkeit für Wasserdampf von weniger als 30 g/m$^2$ d, bevorzugt weniger als 15 g/m$^2$ d, aufweist, bestimmt gemäß DIN 53 122, Teil 1 bei 23 °C und 85 % r. F.. Dazu wird ein Hüllenabschnitt, der abdichtend über ein Trocknungsmittel enthaltendes Schälchen gespannt ist, im Klimaschrank bei stehender Luft einseitig mit Luft einer relativen Feuchte von 85% bei 23°C beaufschlagt. Bestimmt wird das Gewicht des gesamten Schälchens inklusive Hülle, Trockenmittel und abdichtendem Wachs vor und nach dem Aufenthalt im Klimaschrank.

Der Begriff "poröse Schicht" bezeichnet im Sinne der Erfindung eine Vielzahl an untereinander verbundenen Hohlräumen (sog. Öffnungen), insbesondere Poren, welche imstande sind, die Lebensmittelzusatzstoffe effizient aufzunehmen, zu speichern und zu übertragen.

Die Gesamtporosität der einen porösen Schicht liegt in der Regel im Bereich von 5 bis 80 Vol.-%, bestimmt nach der unten beschriebenen Methode ("volumetrische Porositätsbestimmung"). Im Fall mehrerer aneinandergrenzenden porösen Schichten liegen deren Porosität vorzugsweise ebenfalls im Bereich von 5 bis 80 Vol.-% oder die über die mehreren porösen Schichten gemittelte Porosität liegt im Bereich von 5 bis 80%. Bevorzugt sind entsprechende Porositätswerte im Bereich von 10 bis 75 Vol.-%, besonders bevorzugt von 20 bis 70 Vol.-%, besonders bevorzugt im Bereich von 30 bis 65 Vol.-%.

Hauptbestandteil der mindestens einen porösen Schicht ist mindestens ein aliphatisches (Co)Polyamid.

Der Begriff "(Co-)Polyamid" wird im Zusammenhang mit der vorliegenden Erfindung als Kurzbezeichnung für "Polyamid oder Copolyamid" verwendet. Der Begriff "Copolyamid" schließt dabei auch Polyamide mit drei oder mehr verschiedenen Monomer-Einheiten ein.

Von den aliphatischen (Co-)Polyamiden sind Poly($\varepsilon$-caprolactam), auch bezeichnet als PA 6, Copolymere aus $\varepsilon$-Caprolactam und w-Laurinlactam (= PA 6/12), Copolymere aus $\varepsilon$-Caprolactam, Hexamethylendiamin und Adipinsäure (=PA6/66) sowie Terpolymere aus $\varepsilon$-Caprolactam, 3-Aminomethyl-3,5,5-trimethylcyclohexylamin (Isophorondiamin) und Isophthalsäure bevorzugt. Zu den (Co-)Polyamiden werden auch heterofunktionelle Polyamide, insbesondere Polyetheramide, Polyesteramide, Polyetheresteramide und Polyamidurethane gerechnet. Unter diesen Polymeren sind solche mit blockartiger Verteilung der verschiedenen Funktionalitäten, d. h. Blockcopolymere bevorzugt. Besonders bevorzugte Blockcopolymere sind Poly(ether-block-amide).

Der Anteil des aliphatischen (Co-)Polyamids beträgt allgemein 50 bis 95 Gew.-%, bevorzugt 60 bis 85 Gew.-%, besonders bevorzugt 70 bis 80 Gew.-%, jeweils bezogen auf das Gesamtgewicht der jeweiligen porösen Schicht.

Weiterer Bestandteil der mindestens einen porösen Schicht ist mindestens ein hydrophiles (Co-)Polymer mit einer mittleren Molmasse $M_w$ von mindestens 8.000 Da. Bevorzugt sind darunter:

a) Polyvinylalkohol (PVAL), wie er erhältlich ist durch teilweise oder vollständige Verseifung von Polyvinylacetat (PVAC), oder ein Copolymer mit Vinylalkohol-Einheiten (beispielsweise ein Copolymer mit Einheiten aus Vinylalkohol und Propen-1-ol),

b) Polyvinylpyrrolidon (Homopolymer aus N-Vinyl-2-pyrrolidon),

c) Copolymere mit N-Vinyl-2-pyrrolidon-Einheiten und Einheiten aus mindestens einem $\alpha,\beta$-olefinisch ungesättigtem Monomer, bevorzugt Vinylester, besonders bevorzugt Vinylacetat,

d) Copolymere aus N-Vinyl-2-pyrrolidon und einer oder mehreren $\alpha,\beta$-ungesättigten Carbonsäuren und/oder einer oder mehreren Estern oder Amiden $\alpha,\beta$-ungesättigter Carbonsäuren, bevorzugt Methylacrylat und Acrylamid

e) Copolymere aus N-Vinyl-2-pyrrolidon und N-Vinyl-imidazol

Von diesen Gruppen sind b) und d) besonders bevorzugt. Speziell bevorzugt ist Polyvinylpyrrolidon mit einer mittleren Molmasse $M_w$ im Bereich von 8.500 bis 400.000 Da und einem K-Wert (nach Fickentscher) im Bereich von 15 bis 60. Die mittlere Molmasse $M_w$ des Polyvinylpyrrolidon beträgt bevorzugt 9.700 bis 200.000 Da, besonders bevorzugt 24.000 bis 70.000 Da.

Der Anteil des hydrophilen (Co-)Polymers im Gemisch beträgt allgemein 3 bis 40 Gew.-%, bevorzugt 8 bis 25 Gew.-%, besonders bevorzugt 10 bis 20 Gew.-% bezogen auf das Gesamtgewicht der jeweiligen porösen Schicht.

Zur Schäumung der mindestens einen porösen Schicht wird als weitere Komponente während der Extrusion mindestens ein chemisches Treibmittel zugesetzt. Bevorzugt hierunter sind Zitronensäure und/oder Natriumhydrogencarbonat. Die chemischen Treibmittel zerfallen bei den Temperaturen der Extrusion teilweise oder ganz zu kleineren Molekülen, von denen mindestens eines unter Normalbedingungen gasförmig ist. Die fertige Hülle enthält daher das/die zugesetzte(n) Treibmittel nicht mehr im Urzustand (ggf. noch in verringerter Konzentration), sondern in Form seiner Zerfallsprodukte. Diese lassen sich in der fertigen Hülle in einer entsprechenden Menge nachweisen. Dies sind unter Normalbedingungen gasförmige, zusätzlich auch flüssige und/oder feste Stoffe. Die gasförmigen Zerfallsprodukte bewirken das Aufschäumen. Das bedeutet, sie führen zur Bildung von Blasen bzw. Schaumzellen in der Schmelze. Flüssige Zerfallsprodukte können bei Extrusionstemperatur gegebenenfalls auch gasförmig sein und zur Schäumung beitragen. Im Fall von Natriumhydrogencarbonat entsteht als Gas $CO_2$. Als weitere Zerfallsprodukte verbleiben Natriumcarbonat und Wasser. Zitronensäure spaltet schrittweise Wasser und $CO_2$ ab. Es verbleiben Itaconsäureanhydrid und Citaconsäureanhydrid. Die Menge an chemischem Treibmittel wird so gewählt, dass die oben genannte Porosität der Innenschicht(en) erreicht wird.

Optional enthält die mindestens eine poröse Schicht anorganische oder organische Additive in einem Anteil von 0,2 bis 5 Gew.-% bezogen auf das Gesamtgewicht der jeweiligen Schicht. Beispiele dafür sind Nukleierungsmittel (z.B. $CaCO_3$, $BaSO_4$ oder Talkum), Weichmacher, Plastifiziermittel, darunter Diole (z.B. Polyethylenglykol) und/oder Polyole (z.B. Glycerin), weiterhin Kunststoff-typische Additive wie Antiblock- und Slipmittel, Pigmente und Stabilisatoren.

Der Begriff "Polyol" steht für eine aliphatische Verbindung mit drei oder mehr freien Hydroxygruppen, beispielsweise Glycerin, Diglycerin, 1,1,1-Trimethylolpropan, 2,2-Bis-hydroxymethyl-1,3-propandiol (Pentaerythrit), weiterhin Zuckeralkohole wie Erythrit, Sorbit und Mannit. Bevorzugt hiervon ist Glycerin.

Das hydrophile Polymer mit einer Molmasse $M_w$ von mindestens 8.000 Da hat in der Mischung mit aliphatischem (Co)Polyamid zwei positive Effekte:

1. Eine Erhöhung des Wasser-Quellvermögens der Schaum-Matrix; dadurch kann auf die Schaumoberfläche aufgebrachtes Wasser sowie in Wasser gelöste Stoffe beschleunigt durch die Zellwände der Blasen diffundieren und sich schnell innerhalb der Schaumstruktur verteilen. Vorteil ist eine schnelle "Antrocknung" bzw. Immobilisierung einer auf die Hüllenoberfläche aufgebrachten Schicht aus wäßrigen Lebensmittelzusatzstoffen.

2. Es bewirkt gegenüber reinem (Co-)Polyamid (mit Molmasse im extrusionstypischen Bereich) eine signifikante Erhöhung der Schmelzefestigkeit. Unter Schmelzefestigkeit wird in diesem Zusammenhang ein progressiver Widerstand einer Schmelze gegenüber schnellen Deformationen verstanden. Der Deformationswiderstand ist mathematisch als sogenannte Dehnviskosität $v_\varepsilon$ beschrieben und kann mit speziellen Rheometern gemessen werden. Je höher diese Werte liegen, desto "fester" ist die Schmelze. Hohe Schmelzefestigkeit bewirkt eine verlangsamte, kontrollierte Expansion der beim Schäumen entstehenden Gasblasen und eine Festigkeitserhöhung der "Zellwände" zwischen aneinandergrenzenden Blasen. Unter dieser Voraussetzung ist es möglich, besonders feine Schaumstrukturen mit Blasen bzw. Poren relativ einheitlicher Größe zu erhalten.

Zur Bestimmung der Porosität von geschäumten Schicht(en) bestehen grundsätzlich mehrere Möglichkeiten. So können die Porenflächen an mikroskopischen Bildern von Querschnitten (per Mikrotom hergestellt) der Hülle durch statistisches Ausmessen der Hohlraumränder ermittelt werden, vorzugsweise mittels eines Gitters aus Hilfslinien, welches über das mikroskopische Bild gelegt wird. Durch Kombinieren der Flächenwerte von in mehreren Richtungen angefertigten Querschnitten lässt sich die Gesamt-Porosität als Verhältnis von Hohlraumvolumen zum Gesamtvolumen (geometrischem Volumen) errechnen.

Porosität im Sinne der vorliegenden Erfindung ist die Summe aus "offener Porosität" (durch Poren repräsentiert, welche über Kanäle untereinander und mit der Umgebung verbunden sind" und "geschlossener Porosität" (durch abgeschlossene, nicht verbundene Poren repräsentiert). Bei kleineren Porengrößen eignet sich zur Bestimmung der offenen Porosität die Methode der Quecksilberinfiltration. Im Falle größerer Poren, wie sie bei der Hülle gemäß vorliegender Erfindung vorkommen, sind die genannten Methoden jedoch ungenau beziehungsweise nicht geeignet. Als geeignet zur Bestimmung der Gesamtporosität Φ erwies sich eine Methode "Volumetrische Porositätsbestimmung" gemäß folgender Definition:

$$\Phi = (V_H / V) \times 100\ [\%] = ((V - V_F)/ V) \times 100\ [\%]$$

mit $V_H$ = Hohlraumvolumen,

$V_F$ = Reinvolumen und

V = Gesamtvolumen des Probekörpers

Zur Bestimmung von Φ werden $V_F$ und V wie folgt ermittelt. $V_F$ entspricht dem Volumen einer "porenfreien" extrudierten Schicht aus festen Rohstoffen. Dieses Volumen kann anhand der Dichte des (ungeschäumten) Extrudats sowie der Drehzahl des verwendeten Extruders bzw. der Drehzahl der dem Extruder nachgeschalteten Schmelzepumpe ermittelt werden, sofern eine Durchsatzkalibrierung von Extruder bzw. Pumpe auf das Rohstoffgemisch vorgenommen wurde. Alternativ kann $V_F$ auch an der fertigen Hülle ermittelt werden, indem man deren geschäumte Schicht selektiv mit einem geeigneten Lösungsmittel (z.B. Ameisensäure) ablöst, die erhaltene Lösung eindampft und den Trockenrückstand auswiegt. Das Gesamtvolumen V der geschäumten Schicht wird über deren mittlere Dicke, erhalten durch Ausmessen von per Mikrotom hergestellten Hüllenquerschnitten durch Umrechnen des Dickenwerts auf ein Volumen ermittelt. Die Methode wird in der vorliegenden Anmeldung als "volumetrische Porositätsbestimmung" bezeichnet.

Die Hülle enthält mindestens eine Schicht auf Basis von mindestens einem aliphatischen und/oder teilaromatischen (Co-)Polyamid. Von den aliphatischen (Co-)Polyamiden sind Poly(ε-caprolactam), auch bezeichnet als PA 6, Copolymere aus ε-Caprolactam und w-Laurinlactam (= PA 6/12), Copolymere aus ε-Caprolactam, Hexamethylendiamin und Adipinsäure (=PA6/66) sowie Terpolymere aus ε-Caprolactam, 3-Aminomethyl-3,5,5-trimethyl-cyclohexylamin (Isophorondiamin) und Isophthalsäure bevorzugt. Von den teilaromatischen (Co-)Polyamiden sind Copolymere aus Hexamethylendiamin, Isophthalsäure und Terephthalsäure (PA 6-I/6-T) sowie das Homopolymer aus m-Xylylendiamin und Adipinsäure (Nylon-MXD6) bevorzugt. Die Schicht enthält optional in kleineren Mengen kunststofftypische Additive. Der Anteil der Additiven betrifft von 0,1 bis 5 Gew.-%, bevorzugt 0,2 bis 4 Gew.-%, besonders bevorzugt 0,7 bis 3 Gew.-%, besonders bevorzugt 1 bis 2 Gew.%, bezogen auf das Gesamtgewicht der jeweiligen Schicht. Die bevorzugten Additive sind Antiblock- und/oder Slipmittel, Stabilisatoren und Farbpigmente.

Die Hülle enthält mindestens eine Schicht mit wasserdampfsperrendem (wasserdampfundurchlässigem) Charakter. Vorzugsweise umfasst die Schicht überwiegend olefinisches (Co-)Polymer, z.B. Polyethylen (HDPE, LDPE oder LLDPE), Ethylen-α-Olefin-Copolymere, Polypropylen, Ethylen-Propylen-Copolymere, Terpolymere aus verschiedenen Olefinen. Anteilig können auch heterofunktionelle Olefin-Copolymere enthalten sein. Beispiele dafür sind Copolymere aus Ethylen und Vinylacetat oder Ethylen und (Meth)Acrylsäure sowie entsprechende funktionelle Terpolymere. Auch diese Schicht enthält optional kleinere Mengen kunststofftypische Additive, darunter Antiblock- und/oder Slipmittel, Stabilisatoren und Farbpigmente.

Die Hülle enthält mindestens eine Schicht, welche zu angrenzenden Schichten auf Basis Polyamid angeordnet ist, und chemische und/oder physikalische Hafteigenschaften auszubilden vermag (sog. Haftschicht). Vorzugsweise umfasst diese Schicht überwiegend olefinhaltiges Polymer, das mit polaren funktionellen Gruppen modifiziert ist. Beispiele dafür sind Polyethylen (bzw. Ethylen-α-Olefin-Copolymer) gepfropft mit Anhydrid einer α,β-ungesättigten Dicarbonsäure (bevorzugt Maleinsäureanhydrid), Ethylen/Vinylacetat-Copolymere, Ethylen/(Meth)Acrylsäure-Copolymere und deren Na- oder Zn-Salze, Ethylen/(Meth)Acrylsäureester-Copolymere sowie entsprechende Terpolymere. Als Beimischung können unter anderem nicht funktionalisierte Olefin(Co-)Polymere enthaltend sein.

Eine oder mehrere der Schicht(en) mit wasserdampfsperrendem Charakter und der Schicht(en) mit Hafteigenschaften umfassend eine haftvermittelnde Komponente können auch zu einer Schicht kombiniert sein. Die haftvermittelnde Komponente ist daher in einer oder mehreren der wasserdampfundurchlässigen Schicht(en) enthalten. In diesem Fall sind als Bestandteil der Schicht wieder die im vorstehenden Absatz genannten Polymere bevorzugt. Optional können ein oder mehrere der im Absatz zur wasserdampfsperrenden Schicht genannten Polymere beigemischt sein. Optional kann die Schicht noch Additive wie vorstehend genannt enthalten.

Die erfindungsgemäße Hülle weist allgemein 3, 4, 5, 6, 7, 8 oder 9 Schichten auf. Bevorzugt sind Hüllen mit 5 oder 7 Schichten.

Gegenstand der Erfindung ist auch ein Verfahren zur Herstellung der erfindungsgemäßen Nahrungsmittelhülle. Die Herstellung erfolgt allgemein durch Extrusionsverfahren, die dem Fachmann an sich bekannt sind.

Zunächst wird ein Compound aus mindestens einem aliphatischen (Co-)Polyamid und mindestens einem hydrophilen (Co-)Polymer und gegebenenfalls Additiven hergestellt. Dazu werden die Komponenten in einem hierfür geeigneten Gerät, vorzugsweise einem Zweischneckenkneter (auch Doppelwellenextruder genannt) mit angeschlossener Lochdüse, Luftkühlstrecke und Granulator gemeinsam aufgeschmolzen, plastifiziert, homogenisiert und durch die Düse ausgepresst. Das am Ende erhaltene Granulat wird bei Raumtemperatur mit mindestens einem Treibmittel - dieses optional in Form eines granulären Masterbatches - und gegebenenfalls weiteren Additiven vermischt, und anschließend in einem weiteren Extruder wieder aufgeschmolzen. Im Zuge des Temperaturanstiegs im Extruder beginnt die Bildung des gasförmigen Mediums aus dem Treibmittel. Infolge des im Extruder anliegenden Drucks bleibt das Gas zunächst teilweise oder ganz in der Schmelze gelöst.

Vorzugsweise erfolgt die Extrusion des letztgenannten Gemischs nicht in einem einzelnen Extruder sondern aufgeteilt auf zwei oder mehr ähnliche Extruder. Die Zusammensetzung des Gemischs je Extruder kann dabei leicht variiert sein.

Neben diesem bzw. diesen Extruder(n) beinhaltet das Verfahren zwei oder mehr weitere Extruder. Diesen Extrudern werden jeweils die vorstehend beschriebenen Komponenten der weiteren Schichten zugeführt.

Sämtliche Extruder sind an eine temperierte Coextrusions-Ringdüse mit einer der Extruderanzahl entsprechenden Zahl von Schmelzekanälen angeschlossen. Sofern das treibmittelhaltige Gemisch auf mehrere Extruder verteilt ist, so gelangen die Schmelzeströme aus diesen Extrudern in benachbarte Schmelzekanäle und bilden aneinandergrenzende Schichten. Aus dem Ringspalt dieser Düse tritt ein ringförmiger mehrschichtiger Schmelzefilm aus. Während des Druckabfalls kurz vor Austritt aus der Düse kommt es zur Bildung und Expansion von Gasblasen in der bzw. den mit Treibmittel beladenen Schicht(en). Durch Abkühlen des Schmelzefilms bildet sich ein Primärschlauch mit einer relativ hohen Wandstärke, in dem die Blasen- bzw. Schaumstruktur verfestigt ist. Der Primärschlauch wird anschließend rasch abgekühlt, um den amorphen Zustand der Polymere einzufrieren. Anschließend wird er dann wieder auf die zum Verstrecken erforderliche Temperatur erwärmt, beispielsweise auf etwa 80°C. Verstreckt wird der Schlauch dann in Längs- und in Querrichtung, was vorzugsweise in einem Arbeitsgang durchgeführt wird. Die Längsverstreckung wird üblicherweise mit Hilfe von 2 Quetschwalzenpaaren mit steigender Antriebsgeschwindigkeit vorgenommen. Die Querverstreckung erfolgt durch einen von innen auf die Wände des Schlauches wirkenden Gasdruck. Das Flächenstreckverhältnis (das ist das Produkt aus Längs- und Querstreckverhältnis) beträgt allgemein etwa 6 bis 18, bevorzugt 7 bis 15, besonders bevorzugt etwa 8 bis 11.

Nach dem Verstrecken wird der Schlauch vorzugsweise noch thermofixiert. Durch den Grad der Thermofixierung lassen sich die gewünschten Schrumpfeigenschaften exakt einstellen. Schließlich wird der Schlauch abgekühlt, flachgelegt und aufgewickelt. Die Wandstärke (Gesamtdicke) der Hülle, bestimmt durch mikroskopische Vermessung von Hüllenquerschnitten, beträgt nach dem Verstrecken und Thermofixieren allgemein etwa 40 bis 120 $\mu$m, bevorzugt etwa 60 bis 100 $\mu$m. Der Anteil der geschäumten Schicht(en) auf der Innenseite der Hülle beträgt allgemein 30 bis 85 %, bevorzugt 50 bis 75 %, bezogen auf die Wandstärke. Der Durchmesser der Hülle liegt allgemein im Bereich von 60 bis 220 mm, bevorzugt von 80 bis 170 mm.

Die geschäumte(n) Schicht(en) kann/können entweder an der äußeren oder an der inneren Oberfläche der Schlauchstruktur angeordnet sein. Im ersten Fall erfolgt die Aufbringung des bzw. der Lebensmittelzusatzstoffe auf die Hülle von außen, z. B, durch Sprühen, Aufrollen oder Bedrucken. Anschließend kann die Oberfläche noch getrocknet werden, z.B. mit Heißluft. Hierauf muss die Hülle gewendet werden, um die beaufschlagte Seite nach innen zu bringen, so dass nach Einfüllen des Lebensmittels ein Transfer des/der Zusatzstoffe auf dieses stattfinden kann.

Wenn die geschäumte(n) Schicht(en) an der inneren Oberfläche der Hülle positioniert ist/sind, erfolgt die Aufbringung des/der Lebensmittelzusatzstoffs/e entsprechend innenseitig, vorzugsweise durch sogenannte "Slug-Imprägnierung". Dabei wird eine flüssige Zubereitung des Stoffs/der Stoffe in die Hülle eingefüllt und einige Sekunden in Kontakt mit dieser gehalten. Die Hülle wird anschließend durch ein Quetschwalzenpaar geführt, um den nicht aufgenommenen Überstand der Flüssigkeit abzustreifen. Die so imprägnierte Hülle wird wieder aufgewickelt. Das Verfahren kann kontinuierlich oder diskontinuierlich betrieben werden. Ein Wenden der Hülle erübrigt sich jedenfalls. Sie kann direkt zur Abfüllung des Lebensmittels verwendet werden. Die erfindungsgemäße Nahrungsmittelhülle ist besonders geeignet als künstliche Wursthülle, speziell zur Umhüllung von Koch- oder Brühwurst.

Beispiele:

Die nachfolgenden Beispiele dienen der Erläuterung, ohne jedoch limitierenden Charakter für den Umfang der Erfindung zu haben. Prozente sind Gewichtsprozente, soweit nicht anders angegeben oder aus dem Zusammenhang ersichtlich.

Folgende Ausgangsmaterialien wurden eingesetzt:

(Co)Polyamide:

PA1   Polyamid 6/66 mit einer relativen Viskosität von 3,4 (gemessen in 96%iger Schwefelsäure) und eine Kristallit-Schmelztemperatur von 192°C (gemessen per DSC) (Ultramid® C33 N, BASF SE)

PA2   Polyamid 6 mit einer relativen Viskosität von 4 (gemessen in 96%iger Schwefelsäure) und eine Kristallit-Schmelztemperatur von 220°C (gemessen per DSC) (Ultramid® B40 N, BASF SE)

PA3   Dryblend aus Polyamid (ca. 88%), Polyamid 6-I / 6-T (ca. 1 0%) und Calciumcarbonat (ca. 2%) (Grilon ® FG40 NL, Ems-Chemie)

Hydrophile Polymere:

PVP1   Polyvinylpyrrolidon mit einem K-Wert von 25 und einer mittleren Molmasse $M_w$ von 34.000 Dalton (Kollidon® 25, BASF SE)

PVP2   Polyvinylpyrrolidon mit einem K-Wert von 12 und einer mittleren Molmasse $M_w$ von 5.000 Dalton (PVP K-12, Ashland Industries Europe GmbH)

Plastifiziermittel:

Glycerin   96%-ig, Reinheit gemäß DAB (Deutsches Arzneimittelbuch)

Chemisches Treibmittel:

TR-MB   Treibmittel-Masterbatch auf Wachsbasis, enthaltend Natriumhydrogencarbonat, Zitronensäure und Nucleierungsmittel (Corducel® ETS 9610, Nemetz Additive Plastic GmbH)

Polyamid Antiblockmittel:

PA-AB   Masterbatch auf Basis Polyamid 6 und Calciumcarbonat (5015-FT72, PolyOne Colour and Additives Germany GmbH)

Polyolefin / Polymer mit wasserdampfsperrendem Charakter:

PO1   Polyethylen niederer Dichte (LDPE) mit einer Dichte von 0,923 g/cm3 und einem MFI (Schmelzflussindex) von 2,0 g/10 min, gemessen bei 2,16 kg Last und 190°C (LD100 BW, ExxonMobil)

Olefin-Copolymer:

PO2    Ethylen-Methacrylsäure-Copolymer (9,5 Gew.-% Methacrylsäure) mit einem MFI von 1,3 g/10 min, gemessen bei 2,16 kg Last und 190°C (Nucrel™ 31001, DOW)

Polyolefin Antiblockmittel:

PO-AB    Masterbatch auf Basis Polyethylen-LLDPE und Calciumcarbonat (CESA-Block 1101 der Clariant Masterbatches Deutschland GmbH)

Haftvermittler / Polymer mit Hafteigenschaften gegenüber Polyamid:

PO-HV    Lineares Polyethylen niederer Dichte (LLDPE), gepfropft mit Maleinsäuranhydrid (MSA) mit einer Dichte von 0,928 g/cm$^3$ und mit einem MFI von 3,0 g/10 min, gemessen bei 2,16 kg Last und 190°C (Yparex™ 9403, The Compound Company BV).

Messgrößen zur Charakterisierung der Hüllen:

- Porosität

Die Gesamt-Porosität wurde nach der oben beschriebenen Methode "Volumetrische Porositätsbestimmung" ermittelt.

- Optische Beurteilung

Für die optische Beurteilung wurde aufgewickeltes Hüllenmaterial auf der Seite von Schicht 1 (außenseitig) per Tiefdruckverfahren beschichtet.

Zur Beschichtung können beispielsweise Formulierungen von Farben, wie auch Gemische von vorzugsweise polaren Flüssigrauch-Typen eingesetzt werden.

Hier wurde zur Beschichtung ein Gemisch von Flüssigrauch-Typen verwendet. Der Antrag auf die Hüllenoberfläche erfolgte im flachliegenden Zustand einseitig mittels eines gerasterten Tiefdruckzylinders. Direkt nach dem Beschichten wurde die Hülle durch einen Trockenkanal geführt, welcher von konditionierter Luft einer Temperatur von ca. 60°C durchströmt wurde. Die getrocknete Hülle wurde anschließend in gleicher Weise auf der Rückseite beschichtet, getrocknet und hierauf wieder aufgewickelt. Zur Beurteilung gelangten Probestücke, welche im Abstand von mehreren m ausgeschnitten worden waren.

Die Beurteilung erfolgte anhand (a) des visuellen Erscheinungsbilds der beschichteten Oberfläche und (b) einer bildanalytischen Bestimmung des braun angefärbten Oberflächenanteils gegenüber der Gesamtoberfläche. Ein hoher Anteil gefärbter Oberfläche zeigt sowohl einen hohen Grad an Absorption des Lebensmitteladditivs als auch eine relativ gleichmäßige Belegung der Oberfläche mit diesem auf.

Für die Bildanalyse (b) wurden von 4 Probeausschnitten je Beispiel zunächst mikroskopische Aufsicht-Aufnahmen der beschichteten Oberfläche angefertigt. Verwendet wurde ein Lichtmikroskop Typ Olympus BX60 mit angebauter Digitalkamera Typ Hitachi HV-C20. Alle Aufnahmen wurden unter einheitlicher Beleuchtung der Proben mit Auflicht und mit einheitlichen Kameraeinstellungen angefertigt. Von jedem Bild gelangte ein Ausschnitt mit dem Abmessungen 1400 x 1200 μm zur Analyse.

Die Bildanalyse erfolgte mit Hilfe der Software ColorAnalysis, Fa. Datinf® GmbH, Tübingen. Diese Software erlaubt nach Vorwahl von Farbwerten für ein Objekt und für die Objektumgebung eine Berechnung der Objektfläche bezogen auf die Gesamtfläche aus Objekten und Objektumgebung. Dabei rechnet die Software zunächst für jeden Pixel des Kamerabildes dessen RGB-Werte in HSV-Koordinaten um. (Zum Verständnis des HSV-Farbraums siehe: https://de.wikipedia.org/wiki/HSV-Farbraum. Der Wert H benennt den Winkel in einem Farbkreis, S definiert die Farbsättigung und V die Helligkeit des Farbtons.) Die vorgewählten Farbtöne für Objekt und Umgebung werden ebenfalls in HSV-Werte umgerechnet. Anschließend erfolgt Konvertierung der HSV-Werte in kartesische Koordinaten. Hierauf ermittelt die Software für jeden Bild-Pixel den jeweils geringeren quadratischen Abstand (geteilt durch 0,01%-Gewichtung) zur Objektfarbe bzw. zur Umgebungsfarbe und gibt die Pixelzahlen, welche jeder dieser Farben zugeordnet wurden, als Prozentwerte aus.

Für alle Bildanalysen wurden einheitlich folgende Auswahlfarben gewählt:

| Objektfarbe | H = 32 | | Umgebungsfarbe | H = 180 |
|---|---|---|---|---|
| | S = 98 | (mittleres Braun) | | S = 94 |
| (weiß) | | | | |
| | V = 52 | | | V = 100 |

In Tabelle 5 sind die gemittelten Flächenanteile aus je 4 Bildern je Beispiel angegeben.

Beispiel 1 (erfindungsgemäß) und Beispiel V1 (Vergleich): Herstellung von Compounds aus aliphatischem Copolyamid und hydrophilem Polymer

In einem Zweischnecken-Extruder (Hersteller Coperion, Schneckendurchmesser 25 mm) mit Einloch-Austrittsdüse wurden über drei diskret angeordnete Dosiervorrichtungen sequenziell die in Tabelle 1 aufgeführten Komponenten zugeführt. Die Dosiergeschwindigkeiten [Masse pro Zeiteinheit] standen zueinander im Verhältnis entsprechend den in der Tabelle angegebenen Prozentwerten. Der Extruder war an der Zuführungsstelle des Polyamids auf 180°C temperiert. Bei den anschließenden Gehäusezonen wurde die Temperierung schrittweise bis auf maximal 230°C erhöht. Die Schneckendrehzahl betrug etwa 200 U/min. Auf diese Weise wurde das Polyamid aufgeschmolzen und mit dem pulverförmigen PVP sowie dem Glycerin zu einem homogenen Gemisch plastifiziert. Das Gemisch trat über die Lochdüse aus dem Extruder als wasserklarer, gleichförmiger Strang aus. Der Strang wurde zur Abkühlung durch ein Wasserbad geführt und mittels eines Stranghäckslers anschließend zu Granulatkörnern zerkleinert. Das Granulat wurde im Umluft-Trockner bei etwa 100°C getrocknet.

Tabelle 1: Komponenten der Compounds

| Beispi el | Bezeichnung Compound | aliphatisches Polyamid | hydrophiles Polymer | Plastifiziermittel |
|---|---|---|---|---|
| 1 | Comp1 | PA1 75,5 Gew.-% | PVP1 21 Gew.-%. | Glycerin 2,7 Gew.-% |
| V1 | Comp2 | PA1 75,5 Gew.-% | PVP2 21 Gew.-%. | Glycerin 2,7 Gew.-% |

Beispiele 2 und 3: Herstellung biaxial verstreckter Schlauchhüllen mit geschäumten Schichten

Zur Herstellung der Hüllen wurde eine Coextrusionsanlage nach Stand der Technik verwendet. Die Coextrusionsanlage ist mit 7 Extrudern, denen jeweils auf Massedurchsatz kalibrierte Schmelzepumpen nachgeschaltet waren, einer 7-Schicht-Ringdüse mit 60 mm Ringdurchmesser, einem Rohrkalibriersystem, einer nachgeschalteten Streckzone zu biaxialen Blasenreckung, einer sich anschließenden Thermo-Fixierzone und abschließend einer Schlauch-Aufwicklung (sog. Double-Bubble-Anlage) ausgestattet.

Der Anschluss der 7 Extruder an die Düse war so, dass der aus Extruder 1 austretende Schmelzestrom an den die Außenschicht bildenden Kanal und der Strom aus Extruder 7 den die Innenschicht des den 7-schichtigen Schlauch bildeten Kanals bildete. Die übrigen Extruder waren entsprechend der Extruder-Nummerierung an die Düsenkanäle angeschlossen.

Die Granulate bzw. Granulat-Vormischungen gemäß Tabelle 2 wurden über übliche Dosiervorrichtungen den 7 Extrudern zugeführt, in diesen aufgeschmolzen, plastifiziert und in Richtung der Düse gefördert. Die Temperierung der Extruder bewegte sich jeweils im Bereich zwischen 100 und 240°C (stromabwärts ansteigend). Die Düse war auf 235°C temperiert. Das den Extrudern 1 bis 3 anteilig zugeführte Treibmittel spaltete aufgrund der erhöhten Temperaturen in den Schmelzeströmen sukzessive Gas ab. Während des Druckabfalls bei Austreten des Schmelzefilms aus der Düse erfolgte eine Aufschäumung der entsprechenden Schichten 1, 2 und 3. Der Schmelzefilm wurde über das Rohrkalibriersystem zu einem Vorschlauch von 32 mm Durchmesser geformt und verfestigt. In der Streckzone wurde der Schlauch dann biaxial um einen Faktor von 8,05 verstreckt, anschließend durch die Thermo-Fixierzone geführt, flachgelegt und aufgewickelt. Die resultierenden Hüllen hatten ein Kaliber von 104 mm und einen Schrumpf (gemessen nach 15 min Einlegen in 80°C warmes Wasser) von 6 bis 10%, jeweils in Längs- und in Querrichtung. Die Gesamtdicke der Hüllen war aufgrund ihrer geschäumten, porösen Oberflächen mechanisch nicht präzise messbar. Angegeben sind die gravimetrisch errechneten Dicken der Schichten ("Reindicken") und die resultierenden Gesamt-Reindicken der Hüllen (Expansion durch Schäumung unberücksichtigt).

Tabelle 2: Aufbau der Hüllen gemäß Beispielen 2 und 3 (erfindungsgemäß)

| Beispiel Nr. | Schicht | Zusammensetzung [Gew.-%] | Reindicke Einzelschicht [1] [um / %] | Reindicke der Gesamtstruktur [1] [μm] |
|---|---|---|---|---|
| 2 | 1 | Comp1 [87], PA-AB [9], TR-MB [4] | 4,2 / 7,2 | 58,4 |
| | 2 | Comp1 [87], PA-AB [9], TR-MB [4] | 4,3 / 7,4 | |
| | 3 | Comp1 [87], PA-AB [9], TR-MB [4] | 15,1 / 25,8 | |
| | 4 | PO-HV [100] | 2,4 / 4,1 | |
| | 5 | PA1 [30], PA2 [70] | 22,6 / 38,7 | |
| | 6 | PO-HV [100] | 2,4 / 4,1 | |
| | 7 | PA3 [100] | 7,4 / 12,7 | |
| 3 | 1 | Comp1 [87], PA-AB [9], TR-MB [4] | 4,0 / 6,9 | 58,2 |
| | 2 | Comp1 [87], PA-AB [9], TR-MB [4] | 4,5 / 7,7 | |
| | 3 | Comp1 [87], PA-AB [9], TR-MB [4] | 14,8 / 25,4 | |
| | 4 | PO-HV [100] | 2,5 / 4,3 | |
| | 5 | PA1 [30], PA2 [70] | 22,1 / 38,0 | |
| | 6 | PA1 [30], PA2 [70] | 3,5 / 6,0 | |
| | 7 | PA3 [100] | 6,8 / 11,7 | |
| 1) Effekt der Schäumung nicht berücksichtigt | | | | |

Vergleichsbeispiele V2 bis V5:

Mittels der beschriebenen Coextrusionsanlage wurden unter den gleichen Bedingungen wie bei Beispielen 2 bis 3 mehrschichtige, biaxial verstreckte Hüllen hergestellt. Zusammensetzung der Schichten und Hüllenaufbauten sind in Tabelle 3 dargestellt.

Tabelle 3: Aufbau der Hüllen gemäß Vergleichsbeispielen V2 bis V5. (nicht erfindungsgemäß)

| Beispiel Nr. | Schicht | Zusammensetzung [Gew.-%] | Reindicke Einzelschicht [1] [μm / %] | Reindicke der Gesamtstruktur [1] [μm] |
|---|---|---|---|---|
| V2 | 1 | Comp2 [87], PA-AB [9], TR-MB [4] | 4,0 / 6,9 | 58,1 |
| | 2 | Comp2 [87], PA-AB [9], TR-MB [4] | 4,2 / 7,2 | |
| | 3 | Comp2 [87], PA-AB [9], TR-MB [4] | 14,2 / 24,4 | |
| | 4 | PO-HV [100] | 2,6 / 4,5 | |
| | 5 | PA1 [30], PA2 [70] | 22,8 / 39,3 | |
| | 6 | PO-HV [100] | 2,6 / 4,5 | |
| | 7 | PA3 [100] | 7,7 / 13,2 | |
| V3 | 1 | **PO1** [87], PO-AB [9], TR-MB [4] | 3,8 / 6,3 | 60,0 |
| | 2 | **PO1** [87], PO-AB [9], TR-MB [4] | 3,5 / 5,8 | |
| | 3 | **PO1** [87], PO-AB [9], TR-MB [4] | 12,5 / 20,8 | |
| | 4 | PO-HV [100] | 2,7 / 4,5 | |
| | 5 | PA1 [30], PA2 [70] | 26,7 / 44,5 | |
| | 6 | PO-HV [100] | 2,3 / 3,8 | |
| | 7 | PA3 [100] | 8,5 / 14,2 | |
| V4 | 1 | **PA3** [87], PA-AB [9], TR-MB [4] | 4,5 / 7,5 | 59,9 |
| | 2 | **PA3** [87], PA-AB [9], TR-MB [4] | 4,6 / 7,7 | |
| | 3 | **PA3** [87], PA-AB [9], TR-MB [4] | 15,2 / 25,4 | |
| | 4 | PO-HV [100] | 2,8 / 4,7 | |
| | 5 | PA1 [30], PA2 [70] | 23,1 /38,6 | |
| | 6 | PO-HV [100] | 2,5 / 4,2 | |
| | 7 | PA3 [100] | 7,2 / 12,0 | |

(fortgesetzt)

| Beispiel Nr. | Schicht | Zusammensetzung [Gew.-%] | Reindicke Einzelschicht [1] [$\mu$m / %] | Reindicke der Gesamtstruktur [1] [$\mu$m] |
|---|---|---|---|---|
| V5 | 1 | **PO2** [87], PO-AB [9], TR-MB [4] | 4,4 / 7,5 | 58,8 |
| | 2 | **PO2** [87], PO-AB [9], TR-MB [4] | 4,3 / 7,3 | |
| | 3 | **PO2** [87], PO-AB [9], TR-MB [4] | 15,1 / 25,7 | |
| | 4 | PO-HV [100] | 2,6 / 4,4 | |
| | 5 | PA1 [30], PA2 [70] | 22,8 / 38,8 | |
| | 6 | PO-HV [100] | 2,4 / 4,1 | |
| | 7 | PA3 [100] | 7,2 / 12,2 | |
| 1) Effekt der Schäumung nicht berücksichtigt | | | | |

Alle Hüllen gemäß Beispielen wurden unter einheitlichen Bedingungen mit dem Lebensmitteladditiv beschichtet, wie oben beschrieben.

Die an Proben aus den Beispielen ermittelten Eigenschaften sind in der nachfolgenden Tabelle 4 und 5 aufgeführt.

Tabelle 4: Porositätswerte der erfindungsgemäßen Hüllen sowie der Hüllen aus Vergleichsbeispielen

| Beispiel | Summe Reinvolumina der Schichten 1 bis 3 pro Flächeneinheit [1] $V_{R\,1-3}$ [$\mu$m$^3$ / $\mu$m$^2$] | Volumensumme der Schichten 1 bis 3 pro Flächeneinheit [2] $V_{1-3}$ [$\mu$m$^3$ / $\mu$m$^2$] | Mittlere Gesamtporosität der Schichten 1 bis 3 [3] $\Phi_{1-3}$ [%] |
|---|---|---|---|
| 2 | 23,6 | 67 | 65 |
| 3 | 23,3 | 61 | 62 |
| V2 | 22,4 | 42 | 47 |
| V3 | 19,8 | 30 | 34 |
| V4 | 24,3 | 35 | 39 |
| V5 | 23,8 | 59 | 60 |
| 1) Wert entspricht der Summe der Reindicken Schichten 1, 2 und 3 (siehe Tabelle 3); 2) Wert entspricht der Summe der Dicken der geschäumten Schichten, diese ermittelt durch Ausmessen mikroskopischer Aufnahmen von Hüllen-Querschnitten; 3) berechnet gemäß beschriebener Methode "Volumetrische Porositätsermittlung". | | | |

Tabelle 5: Optische Bewertung der Oberflächen von mit Lebensmitteladditiv beschichteten erfindungsgemäßen Hüllen sowie beschichteten Hüllen aus Vergleichsbeispielen

| Beispiel | Visuelles Erscheinungsbild | Flächenanteil Objektfarbe (braun) [%] | Flächenanteil Umgebungsfarbe (weiß) [%] |
|---|---|---|---|
| 2 | Oberfläche und Hohlräume vollständig angefärbt, homogener Farbeindruck | 83,9 | 16,1 |
| 3 | Oberfläche und Hohlräume vollständig angefärbt, homogener Farbeindruck | 79,2 | 19,8 |

(fortgesetzt)

| Beispiel | Visuelles Erscheinungsbild | Flächenanteil Objektfarbe (braun) [%] | Flächenanteil Umgebungsfarbe (weiß) [%] |
|---|---|---|---|
| V2 | Oberfläche und Hohlräume angefärbt, Hohlräume groß und ungleichförmig, etwas "unruhiger" Farbeindruck | 50,5 | 49,5 |
| V3 | dunkle runde Farbpunkte, stark "gesprenkelter" Farbeindruck | 17,2 | 82,8 |
| V4 | Hohlräume angefärbt, Zwischenbereiche weiß, leicht inhomogener Farbeindruck | 21,3 | 78,7 |
| V5 | Hohlräume partiell angefärbt, Zwischenbereiche weiß, deutlich inhomogener Farbeindruck | 19,9 | 80,1 |

Die hohen Werte der Gesamtporosität, die Homogenität des visuellen Erscheinungsbilds und der hohe Flächenanteil der Objektfarbe bei Beispielen 2 und 3 belegen die Überlegenheit der erfindungsgemäßen Hülle gegenüber dem Stand der Technik.

**Patentansprüche**

1.  Coextrudierte, wasserdampfundurchlässige, schlauchförmige, nahtlose Nahrungsmittelhülle mit mindestens drei Schichten, umfassend:

    mindestens eine poröse Schicht, wobei eine der porösen Schichten eine Oberflächenschicht bildet, die einem Lebensmittel zugewandt ist,
    mindestens eine Trägerschicht auf Basis von mindestens einem aliphatischen und/oder teilaromatischen (Co)Polyamid und
    mindestens eine wasserdampfundurchlässige Schicht, wobei entweder mindestens eine Haftschicht umfassend eine haftvermittelnde Komponente zwischen den angrenzenden Schichten angeordnet ist, oder
    die haftvermittelnde Komponente in einer oder mehreren der wasserdampfundurchlässigen Schicht(en) enthalten ist,
    **dadurch gekennzeichnet, dass**
    mindestens eine poröse Schicht ein aliphatisches (Co-)Polyamid und ein hydrophiles (Co-)Polymer mit einer mittleren Molmasse $M_w$ von mindestens 8.000 Da umfasst,
    wobei der Anteil des hydrophilen (Co)Polymers in der porösen Schicht 3 bis 40 Gew.-%, bezogen auf das Gesamtgewicht der jeweiligen porösen Schicht, beträgt.

2.  Nahrungsmittelhülle gemäß Anspruch 1, **dadurch gekennzeichnet, dass** mindestens eine poröse Schicht eine Gesamtporosität $\phi$ im Bereich von 5 bis 80 Vol.-%, bevorzugt von 10 bis 75 Vol.-%, besonders bevorzugt 20 bis 70 Vol.-%, besonders bevorzugt im Bereich von 30 bis 65 Vol.-%, aufweist, wobei $\phi$ nach der beschriebenen Methode "Volumetrische Porositätsbestimmung" ermittelt wird.

3.  Nahrungsmittelhülle gemäß Anspruch 1 oder 2 **dadurch gekennzeichnet, dass** das aliphatische (Co)Polyamid der mindestens einen porösen Schicht und/oder der mindestens einen Trägerschicht Poly($\epsilon$-caprolactam) (PA6), Copolymere aus $\epsilon$-Caprolactam und $\omega$-Laurinlactam (PA 6/12), Copolymere aus $\epsilon$-Caprolactam, Hexamethylendiamin und Adipinsäure (PA6/66) sowie Terpolymere aus $\epsilon$-Caprolactam, 3-Aminomethyl-3,5,5-trimethyl-cyclohexylamin (Isophorondiamin) und/oder Isophthalsäure umfasst.

4.  Nahrungsmittelhülle gemäß Anspruch 1, **dadurch gekennzeichnet, dass** das teilaromatische (Co)Polyamid der mindestens einen Trägerschicht ein Copolymer aus Hexamethylendiamin, Isophthalsäure und Terephthalsäure (PA 6-I/6-T) oder ein Homopolymer aus meta-Xylylendiamin und Adipinsäure (Nylon-MXD6) ist.

5.  Nahrungsmittelhülle gemäß einem oder mehreren der Ansprüche 1 bis 4, **dadurch gekennzeichnet, dass** der Anteil des/der aliphatischen (Co-)Polyamids/e in der mindestens einen porösen Schicht 50 bis 95 Gew.-%, bevorzugt 60 bis 85 Gew.-%, besonders bevorzugt 70 bis 80 Gew.-%, jeweils bezogen auf das Gesamtgewicht der jeweiligen Schicht, beträgt.

6. Nahrungsmittelhülle gemäß einem oder mehreren der Ansprüche 1 bis 5, **dadurch gekennzeichnet dass** das hydrophile (Co-)Polymer

   - Polyvinylalkohol (PVAL), ein Copolymer mit Vinylalkohol-Einheiten, bevorzugt ein Copolymer mit Einheiten aus Vinylalkohol und Propen-1-ol;
   - Polyvinylpyrrolidon, bevorzugt ein Homopolymer aus N-Vinyl-2-pyrrolidon-Einheiten;
   - ein Copolymer aus oder mit N-Vinyl-2-pyrrolidon-Einheiten und Einheiten aus mindestens einem $\alpha,\beta$-olefinisch ungesättigtem Monomer, bevorzugt Vinylester, besonders bevorzugt Vinylacetat;
   - ein Copolymer aus Einheiten von N-Vinyl-2-pyrrolidon und einer oder mehreren $\alpha,\beta$-ungesättigten Carbonsäuren und/oder einer oder mehreren Estern oder Amiden $\alpha,\beta$-ungesättigter Carbonsäuren, bevorzugt Methylacrylat und Acrylamide; oder
   - ein Copolymer aus Einheiten von N-Vinyl-2-pyrrolidon und N-Vinyl-imidazol ist.

7. Nahrungsmittelhülle gemäß einem oder mehreren der Ansprüche 1 bis 6, **dadurch gekennzeichnet, dass** der Anteil des hydrophilen (Co)Polymers in der porösen Schicht 8 bis 25 Gew.-%, bevorzugt 10 bis 20 Gew.-%, bezogen auf das Gesamtgewicht der jeweiligen porösen Schicht, beträgt.

8. Nahrungsmittelhülle gemäß einem oder mehreren der Ansprüche 1 bis 7, **dadurch gekennzeichnet, dass** die Hülle mindestens ein chemisches Treibmittel, bevorzugt Zitronensäure und/oder Natriumhydrogencarbonat, und/oder thermische Abbauprodukte mindestens eines chemischen Treibmittels umfasst.

9. Nahrungsmittelhülle gemäß einem oder mehreren der Ansprüche 1 bis 8, **dadurch gekennzeichnet, dass** mindestens eine poröse Schicht anorganische oder organische Additive enthält.

10. Nahrungsmittelhülle gemäß einem oder mehreren der Ansprüche 1 bis 9, **dadurch gekennzeichnet, dass** die wasserdampfundurchlässige Schicht ein olefinisches (Co-)Polymer, bevorzugt Polyethylen (HDPE, LDPE oder LLDPE), Ethylen-$\alpha$-Olefin-Copolymeren, Polypropylen, ein Ethylen-Propylen-Copolymer oder ein Terpolymer aus verschiedenen Olefinen umfasst.

11. Nahrungsmittelhülle gemäß einem oder mehreren der Ansprüche 1 bis 10, **dadurch gekennzeichnet, dass** die Haftschicht ein olefinhaltiges Polymer umfasst, bevorzugt Polyethylen (bzw. Ethylen-$\alpha$-Olefin-Copolymer) gepfropft mit dem Anhydrid einer $\alpha,\beta$-ungesättigten Dicarbonsäure, besonders bevorzugt Maleinsäureanhydrid; ein Ethylen/Vinylacetat-Copolymer, ein Ethylen/(Meth)Acrylsäure-Copolymer oder deren Na- oder Zn-Salz, ein Ethylen/(Meth)Acrylsäureester-Copolymer oder ein entsprechendes Terpolymer.

12. Nahrungsmittelhülle gemäß einem oder mehreren der Ansprüche 1 bis 11, **dadurch gekennzeichnet, dass** mindestens eine der weiteren (nicht porösen) Schichten kunststofftypische Additive in einem Anteil von 0,2 bis 5 Gew.-%, bezogen auf das Gesamtgewicht der jeweiligen Schicht, enthält.

13. Verfahren zur Herstellung einer Nahrungsmittelhülle gemäß einem oder mehreren der Ansprüche 1 bis 12 umfasst folgende Schritte:

   - Bereitstellen eines Granulats umfassend mindestens ein aliphatisches (Co)Polyamid, mindestens ein hydrophiles (Co-)Polymer und gegebenenfalls Additiv(en),
   - Herstellen von einer oder mehreren Mischungen des erhaltenden Granulats mit mindestens einem Treibmittel oder mindestens einem Treibmittel-Masterbatch und gegebenenfalls weiteren Additiven;
   - Aufschmelzen, Plastifizieren und Homogenisieren des Gemischs bzw. der Gemische in einem bzw. mehreren Extruder(n);
   - Aufschmelzen, Plastifizieren und Homogenisieren eines oder mehrerer Granulate/Granulatgemische für die Trägerschicht(en) in einem oder mehreren weiteren Extruder(n);
   - Aufschmelzen, Plastifizieren und Homogenisieren eines oder mehrerer Granulate/Granulatgemische für die wasserdampfundurchlässigen Schicht(en) in einem oder mehreren weiteren Extruder(n)
   - gegebenenfalls Aufschmelzen, Plastifizieren und Homogenisieren eines oder mehrerer Granulate/Granulatgemische für die Haftschicht(en) in einem oder mehreren weiteren Extruder(n)

- Zusammenführen der Schmelzeströme in einer Coextrusions-Ringdüse und Formen zu einem nahtlosen mehrschichtigen Primärschlauch;
- Rasches Abkühlen des Primärschlauchs;
- Erwärmen des Primärschlauchs auf etwa 80 °C mit anschließendem Verstrecken des Primärschlauchs in Längs- und Querrichtung.

14. Verwendung der Nahrungsmittelhülle gemäß einem oder mehreren der Ansprüche 1 bis 13 als künstliche Wursthülle, insbesondere zur Umhüllung von Koch- oder Brühwurst.

**Claims**

1. Coextruded, water vapour-impermeable, tubular, seamless food casing having at least three layers, comprising:

   at least one porous layer, wherein one of the porous layers forms a surface layer that faces toward a food,
   at least one carrier layer based on at least one aliphatic and/or partially aromatic (co-)polyamide, and
   at least one water vapour-impermeable layer, wherein either
   at least one adhesive layer comprising an adhesion-promoting component is arranged between the adjoining layers or
   the adhesion-promoting component is contained in one or more of the water vapour-impermeable layer(s),
   **characterized in that**
   at least one porous layer comprises an aliphatic (co)polyamide and a hydrophilic (co-)polymer having a mean molar mass $M_w$ of at least 8000 Da,
   wherein the proportion of the hydrophilic (co-)polymer in the porous layer is 3 to 40 wt.%, in relation to the total weight of the respective porous layer.

2. Food casing according to Claim 1, **characterized in that** at least one porous layer has a total porosity $\phi$ in the range of 5 to 80 vol.%, preferably 10 to 75 vol.%, particularly preferably 20 to 70 vol.%, particularly preferably in the range of 30 to 65 vol.%, wherein $\phi$ is ascertained according to the described method "volumetric porosity determination".

3. Food casing according to Claim 1 or 2, **characterized in that** the aliphatic (co-)polyamide of the at least one porous layer and/or the at least one carrier layer comprises poly($\varepsilon$-caprolactam) (PA 6), copolymers of $\varepsilon$-caprolactam and $\omega$-laurin lactam (PA 6/12), copolymers of $\varepsilon$-caprolactam, hexamethylene diamine, and adipic acid (PA6/66), and terpolymers of $\varepsilon$-caprolactam, 3-aminomethyl-3,5,5-trimethylcyclohexylamine (isophorone diamine) and/or isophthalic acid.

4. Food casing according to Claim 1, **characterized in that** the partially aromatic (co-)polyamide of the at least one carrier layer is a copolymer of hexamethylene diamine, isophthalic acid, and terephthalic acid (PA 6-1/6-1) or a homopolymer of meta-xylylene diamine and adipic acid (nylon-MXD6) .

5. Food casing according to one or more of Claims 1 to 4, **characterized in that** the proportion of the aliphatic (co-)polyamide(s) in the at least one porous layer is 50 to 95 wt.%, preferably 60 to 85 wt.%, particularly preferably 70 to 80 wt.%, each in relation to the total weight of the respective layer.

6. Food casing according to one or more of Claims 1 to 5, **characterized in that** the hydrophilic (co-)polymer is

   - polyvinyl alcohol (PVAL), a copolymer having vinyl alcohol units, preferably a copolymer having units made up of vinyl alcohol and propen-1-ol;
   - polyvinyl pyrrolidone, preferably a homopolymer made up of N-vinyl-2-pyrrolidone units;
   - a copolymer made up of or having N-vinyl-2-pyrrolidone units and units of at least one $\alpha,\beta$-olefinically unsaturated monomer, preferably vinyl ester, particularly preferably vinyl acetate;
   - a copolymer made up of units of N-vinyl-2-pyrrolidone and one or more $\alpha,\beta$-unsaturated carboxylic acids and/or one or more esters or amides of $\alpha,\beta$-unsaturated carboxylic acids, preferably methyl acrylate and acrylamides; or
   - a copolymer made up of units of N-vinyl-2-pyrrolidone and N-vinylimidazole.

7. Food casing according to one or more of Claims 1 to 6, **characterized in that** the proportion of the hydrophilic (co-)polymer in the porous layer is 8 to 25 wt.%, preferably 10 to 20 wt.%, in relation to the total weight of the respective porous layer.

8. Food casing according to one or more of Claims 1 to 7, **characterized in that** the casing comprises at least one chemical propellant, preferably citric acid and/or sodium hydrogen carbonate, and/or thermal degradation products of at least one chemical propellant.

9. Food casing according to one or more of Claims 1 to 8, **characterized in that** at least one porous layer contains inorganic or organic additives.

10. Food casing according to one or more of Claims 1 to 9, **characterized in that** the water vapour-impermeable layer comprises an olefinic (co-)polymer, preferably polyethylene (HDPE, LDPE, or LLDPE), ethylene-$\alpha$-olefin copolymers, polypropylene, an ethylene-propylene copolymer, or a terpolymer made up of various olefins.

11. Food casing according to one or more of Claims 1 to 10, **characterized in that** the adhesive layer comprises an olefin-containing polymer, preferably polyethylene (or ethylene-$\alpha$-olefin-copolymer) grafted with the anhydride of an $\alpha,\beta$-unsaturated dicarboxylic acid, particularly preferably maleic acid anhydride; an ethylene/vinyl acetate copolymer, an ethylene/(meth)acrylic acid copolymer or their Na or Zn salt, an ethylene/(meth)acrylic acid ester copolymer, or a corresponding terpolymer.

12. Food casing according to one or more of Claims 1 to 11, **characterized in that** at least one of the further (nonporous) layers contains plastic-typical additives in a proportion of 0.2 to 5 wt.% in relation to the total weight of the respective layer.

13. Method for producing a food casing according to one or more of Claims 1 to 12, comprising the following steps:

    - providing a granulated material comprising at least one aliphatic (co-)polyamide, at least one hydrophilic (co-)polymer, and possibly additive(s),
    - producing one or more mixtures of the obtained granulated material with at least one propellant or at least one propellant masterbatch and possibly further additives;
    - melting, plasticizing, and homogenizing the mixture or the mixtures in one or more extruder(s);
    - melting, plasticizing, and homogenizing one or more granulated materials/granulated material mixtures for the carrier layer(s) in one or more further extruder(s);
    - melting, plasticizing, and homogenizing one or more granulated materials/granulated material mixtures for the water vapour-impermeable layer(s) in one or more further extruder(s);
    - possibly melting, plasticizing, and homogenizing one or more granulated materials/granulated material mixtures for the adhesive layer (s) in one or more further extruder(s);
    - bringing together the melt flows in a coextrusion annular die and forming them into a seamless multi-layered primary tube;
    - rapidly cooling the primary tube;
    - heating the primary tube to approximately 80 °C with subsequent stretching of the primary tube in the longitudinal and transverse directions.

14. Use of the food casing according to one or more of Claims 1 to 13 as an artificial sausage casing, in particular for encasing cooked or boiled sausage.

**Revendications**

1. Enveloppe alimentaire tubulaire, sans soudure, imperméable à la vapeur d'eau et ayant au moins trois couches, comprenant :

    au moins une couche poreuse, l'une des couches poreuses formant une couche superficielle faisant face à un aliment,
    au moins une couche de support à base d'au moins un (co)polyamide aliphatique et/ou partiellement aromatique et
    au moins une couche imperméable à la vapeur d'eau, dans laquelle
    soit au moins une couche d'adhérence comprenant un composant d'adhérence est disposée entre les couches adjacentes,
    soit le composant d'adhérence est contenu dans une ou plusieurs des couches imperméables à la vapeur d'eau, **caractérisée en ce que**

au moins une couche poreuse comprend un (co)polyamide aliphatique et un (co)polymère hydrophile d'une masse moléculaire moyenne $M_w$ d'au moins 8.000 Da,

la proportion du (co)polymère hydrophile dans la couche poreuse est de 3 à 40 % en poids, par rapport au poids total de la couche poreuse respective.

**2.** Enveloppe alimentaire selon la revendication 1, **caractérisée en ce que**

au moins une couche poreuse présente une porosité totale $\varphi$ dans la plage de 5 à 80 % en volume, de préférence de 10 à 75 % en volume, particulièrement préféré de 20 à 70 % en volume, particulièrement préféré dans la plage de 30 à 65 % en volume,

$\varphi$ étant déterminé selon la méthode décrite "Détermination de la porosité volumétrique" ("Volumetrische Porositätsbestimmung" en allemand).

**3.** Enveloppe alimentaire selon la revendication 1 ou 2, **caractérisée en ce que**
le (co)polyamide aliphatique de l'au moins une couche poreuse et/ou de l'au moins une couche de support comprend du poly($\varepsilon$-caprolactame) (PA6), des copolymères d'$\varepsilon$-caprolactame et d'$\omega$-laurinlactame (PA 6/12), des copolymères d'$\varepsilon$-caprolactame, d'hexaméthylènediamine et d'acide adipique (PA6/66) ainsi que des terpoly-mères d'$\varepsilon$-caprolactame, de 3-aminométhyl-3,5,5-triméthyl-cyclohexylamine (isophorondiamine) et/ou d'acide isophtalique.

**4.** Enveloppe alimentaire selon la revendication 1, **caractérisée en ce que**
le (co)polyamide partiellement aromatique de l'au moins une couche de support est un copolymère d'hexaméthylènediamine, d'acide isophtalique et d'acide téréphtalique (PA 6-I/6-T) ou un homopolymère de *méta*-xylylènediamine et d'acide adipique (Nylon-MXD6).

**5.** Enveloppe alimentaire selon une ou plusieurs des revendications 1 à 4, **caractérisée en ce que**
la proportion du/des (co)polyamide(s) aliphatique(s) dans l'au moins une couche poreuse est de 50 à 95 % en poids, de préférence de 60 à 85 % en poids, particulièrement préféré de 70 à 80 % en poids, par rapport au poids total de la couche respective.

**6.** Enveloppe alimentaire selon une ou plusieurs des revendications 1 à 5, **caractérisée en ce que**
le (co)polymère hydrophile est

- l'alcool polyvinylique (PVAL), un copolymère avec des motifs d'alcool vinylique, de préférence un copolymère avec des motifs d'alcool vinylique et de propène-1-ol ;
- la polyvinylpyrrolidone, de préférence un homopolymère de motifs N-vinyl-2-pyrrolidone ;
- un copolymère de ou avec des motifs N-vinyl-2-pyrrolidone et des motifs d'au moins un monomère $\alpha,\beta$-oléfiniquement insaturé, de préférence l'ester vinylique, de manière particulièrement préférée l'acétate de vinyle ;
- un copolymère de motifs de N-vinyl-2-pyrrolidone et d'un ou plusieurs acides carboxyliques $\alpha,\beta$-insaturés et/ou un ou plusieurs esters ou amides d'acides carboxyliques $\alpha,\beta$-insaturés, de préférence l'acrylate de méthyle et les acrylamides ; ou
- un copolymère de motifs de N-vinyl-2-pyrrolidone et de N-vinyl-imidazole.

**7.** Enveloppe alimentaire selon une ou plusieurs des revendications 1 à 6, **caractérisée en ce que**
la proportion du (co)polymère hydrophile dans la couche poreuse est de 8 à 25 % en poids, de préférence de 10 à 20 % en poids, par rapport au poids total de la couche poreuse respective.

**8.** Enveloppe alimentaire selon une ou plusieurs des revendications 1 à 7, **caractérisée en ce que**
l'enveloppe comprend au moins un agent d'expansion chimique, de préférence l'acide citrique et/ou le bicarbonate de sodium, et/ou les produits de dégradation thermique d'au moins un agent d'expansion chimique.

**9.** Enveloppe alimentaire selon une ou plusieurs des revendications 1 à 8, **caractérisée en ce que**
au moins une couche poreuse contient des additifs organiques ou inorganiques.

**10.** Enveloppe alimentaire selon une ou plusieurs des revendications 1 à 9, **caractérisée en ce que**
la couche imperméable à la vapeur d'eau comprend un (co)polymère oléfinique, de préférence du polyéthylène (PEHD, PEBD ou PEBDL), des copolymères d'éthylène-$\alpha$-oléfines, du polypropylène, un copolymère d'éthylène-propylène ou un terpolymère de différentes oléfines.

**11.** Enveloppe alimentaire selon une ou plusieurs des revendications 1 à 10, **caractérisée en ce que** la couche d'adhérence comprend un polymère à base d'oléfine, de préférence du polyéthylène (resp. un copolymère d'éthylène-α-oléfine) greffé avec l'anhydride d'un acide dicarboxylique α,β-insaturé, particulièrement préféré l'anhydride maléique ; un copolymère éthylène/acétate de vinyle, un copolymère éthylène/acide (méth)acrylique ou son sel Na ou Zn, un copolymère d'ester d'éthylène/acide (méth)acrylique ou un terpolymère correspondant.

**12.** Enveloppe alimentaire selon une ou plusieurs des revendications 1 à 11, **caractérisée en ce que** au moins une des autres couches (non poreuses) contient des additifs typiques des matières plastiques en une proportion de 0,2 à 5 % en poids, par rapport au poids total de la couche respective.

**13.** Procédé de fabrication d'une enveloppe alimentaire selon une ou plusieurs des revendications 1 à 12, comprenant les étapes suivantes :

- fourniture d'un granulat comprenant au moins un (co)polyamide aliphatique, au moins un (co)polymère hydrophile et éventuellement des additifs ;
- préparation d'un ou plusieurs mélanges du granulat obtenu avec au moins un agent d'expansion ou au moins un masterbatch d'agent d'expansion et éventuellement d'autres additifs ;
- fusion, plastification et homogénéisation du mélange ou des mélanges dans un ou plusieurs extrudeurs ;
- fusion, plastification et homogénéisation d'un ou plusieurs granulats/mélanges de granulats pour la ou les couches de support dans un ou plusieurs autres extrudeurs ;
- fusion, plastification et homogénéisation d'un ou plusieurs granulats/mélanges de granulats pour la ou les couches imperméables à la vapeur d'eau dans un ou plusieurs autres extrudeurs ;
- éventuellement, fusion, plastification et homogénéisation d'un ou plusieurs granulats/mélanges de granulats pour la ou les couches d'adhérence dans un ou plusieurs autres extrudeurs ;
- réunion des flux de fusion dans une filière à coextrusion et formage en un tube primaire multicouche sans soudure ;
- refroidissement rapide du tube primaire ;
- chauffage du tube primaire à environ 80 °C suivi d'un étirement du tube primaire en longueur et en largeur.

**14.** Utilisation de l'enveloppe alimentaire selon une ou plusieurs des revendications 1 à 13 comme boyau artificiel de saucisse, en particulier pour l'enrobage de saucisses cuites ou échaudées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017148682 A1
- EP 3014997 A1
- EP 1911352 A1
- DE 102008017920 A1
- WO 2005097461 A1
- DE 102004017350 A1
- DE 102008017290 A1